# EUROPEAN PATENT SPECIFICATION

(11) **EP 1 792 843 B1**
(45) Date of publication and mention of the grant of the patent: **13.02.2008**
(21) Application number: 05425856.1
(22) Date of filing: 01.12.2005
(51) Int. Cl.: B65D 53/04, B65D 41/04

(54) **Method of producing plastic tops for sealed containers of pourable food products, and container plastic tops so produced**
Herstellungsverfahren für Kunststoffverschlüsse verschlossener Behälter für ausschüttbare Nahrungsmittel und derart hergestellter Verschluss
Methode de production de couvercle en plastique pour des conteneurs scellés pour des matières alimentaires à verser et couvercle tellement produit

(43) Date of publication of application: 06.06.2007
(73) Proprietor: Tetra Laval Holdings & Finance SA, 1009 Pully (CH)
(72) Inventor: Benedetti, Paolo, 41100 Modena (IT); Martini, Pietro, 43100 Parma (IT)
(74) Representative: D'Angelo, Fabio

(56) References cited:
- EP-A- 1 110 873
- WO-A-20/05044538
- US-A- 5 875 909

## Description

The present invention relates to a method of producing plastic tops for sealed containers of pourable food products, according to the preamble of claim 1 and to container plastic tops so produced according to the preamble of claim 6.

As is known, many pourable food products, such as fruit juice, milk, tomato sauce, and beverages in general, are sold in a wide range of containers of different types and sizes, such as : parallelepiped-shaped packages made of multilayer, plastic- and/or paper-based, laminated materials or so-called multilayer cardboard materials; beaker-shaped plastic packages; blow-molded bottles; or glass, sheet metal or aluminium containers.

All these containers are fitted with opening devices to allow access by the consumer to the food product, either to pour it into a drinking vessel or consume it straight from the container.

Screw cap opening devices are commonly used on bottle-type containers, whereas containers made of multilayer cardboard materials are often simply provided with tear-off markers, or with pour openings formed in the containers and covered with pull tabs.

Containers made of multilayer cardboard materials are also known to be fitted with heat-seal plastic opening devices injection molded directly onto the containers, about openings formed through the packaging material, so as to completely close and seal the openings. Opening devices of this sort normally define the pour opening of the container, which may be fitted, for example, with a screw or snap cap.

Injection molded opening devices may of course be of various sizes and even define the whole top of the container, as in the case of the container known by the registered trademark "Tetra Top", and the top of which is illustrated in Patent Application EP-A-0965531.

Though permitting precise, high-quality forming, injection molding container tops does not allow for integrating a layer of gas- and light-barrier material in the tops, as required, for example, when packaging vitamin-supplemented fruit juice.

As described, for example, in Patent EP-B-1197438 and Patent Application WO 03/061940, plastic tops of containers are also known to be produced by blowing a plastic tubular preform, which may include a layer of gas- and light-barrier material.

The container known by the trademark "Tetra Aptiva" is one example of a container produced using this technique, i.e. having a main bottom portion made of multilayer cardboard material, and a top, for pouring the liquid or pourable product in the container, produced by blowing a plastic tubular preform.

This technique provides for a high degree of forming precision, especially as regards the pour opening, but has the drawbacks of being extremely slow and of requiring the use of special-purpose equipment.

From EP-A-1 110 873 a method of producing plastic tops according to the preamble of claim 1 and such plastic tops according to the preamble of claim 6 are known.

To produce plastic tops to be applied to the container portion of multilayer cardboard material, a method has recently been devised comprising thermoforming and injection molding operations, but no blowing.

One example of this method is described in Patent Application WO 2005/044538, and comprises the step of thermoforming a sheet body of multilayer plastic material having a layer of gas-barrier material, e.g. EVOH. The body is defined integrally by an annular base portion, which is eventually fitted to the cardboard bottom portion of the container; and by a cylindrical neck portion projecting from the inner edge of the base portion and defining, with the base portion, a pour opening by which to pour out the food product. Since thermoforming is performed starting from a sheet of plastic material, the neck portion is closed at its side opposite to the base portion. A protective outer layer of plastic material, with a lateral thread to screw on a cap, is injection molded onto the sheet body so formed.

After the above operations, and before applying the cap, the plastic material closing the pour opening is removed.

As is known, the caps used to close the various types of containers described above are normally made of plastic material enabling the caps to be fitted to and removed from the containers easily, and also detached easily, when unsealing the caps, from tamperproof rings, to which they are normally connected by break-off connecting members.

Commonly used materials with the above properties, such as polyethylene and polypropylene, however, fail to provide an effective gas barrier, so the side of the cap facing inwards of the pour opening, in use, must be fitted with an additional disk-shaped member of gas-barrier material known in the trade as a "liner".

The above method of producing plastic tops for combined cardboard-plastic containers therefore involves a good deal of time, work, and waste in material.

In fact, the portion of material closing the pour opening after the thermoforming operation, and which is removed before applying the cap, normally amounts to about 15-20% of the starting material.

Moreover, the liner inserted inside the cap constitutes an additional member, which must be produced and fitted to the cap before the cap is applied to the container.

It is an object of the present invention to provide a method of producing plastic tops for sealed containers of pourable food products, designed to eliminate the aforementioned drawbacks in a straightforward, low-cost manner.

According to the present invention, there is provided a method of producing plastic tops for sealed containers of pourable food products, said method comprising the steps of:
- forming a contoured body from a plastic sheet material having a layer of gas-barrier material, said contoured body comprising an annular base portion, and a neck portion, which projects from said base portion, defines, with the base portion, a pour opening of said container, and is closed, on the opposite side to said base portion, by a disk-shaped member; and
- applying a cap to said neck portion;
and being characterized by comprising the further steps of:
- making a cut along the periphery of said disk-shaped member and on the side facing said pour opening; and
- joining said disk-shaped member, by adhesion, to a portion of said cap superimposed on the disk-shaped member, so that said disk-shaped member defines a layer of gas-barrier material of the cap.

The present invention also relates to a plastic top for sealed containers of pourable food products, said top comprising:
- an annular base portion;
- a neck portion projecting from said base portion, defining, with the base portion, a pour opening of said container, and closed, on the opposite side to said base portion, by a disk-shaped member; and
- a cap applied to said neck portion;
and being characterized in that said disk-shaped member has a cut along its outer periphery and on the side facing said pour opening; and in that said disk-shaped member is joined to a portion of said cap superimposed on the disk-shaped member, so that said disk-shaped member defines a layer of gas-barrier material of the cap.

A preferred, non-limiting embodiment of the present invention will be described by way of example with reference to the accompanying drawings, in which:
Figures 1 to 5 show vertical sections of a plastic top, for sealed containers of pourable food products, at the various stages in the method according to the present invention;
Figure 6 shows a larger-scale vertical section of a detail of Figure 4;
Figure 7 shows a vertical section of the Figure 1-5 plastic top after the container is opened.

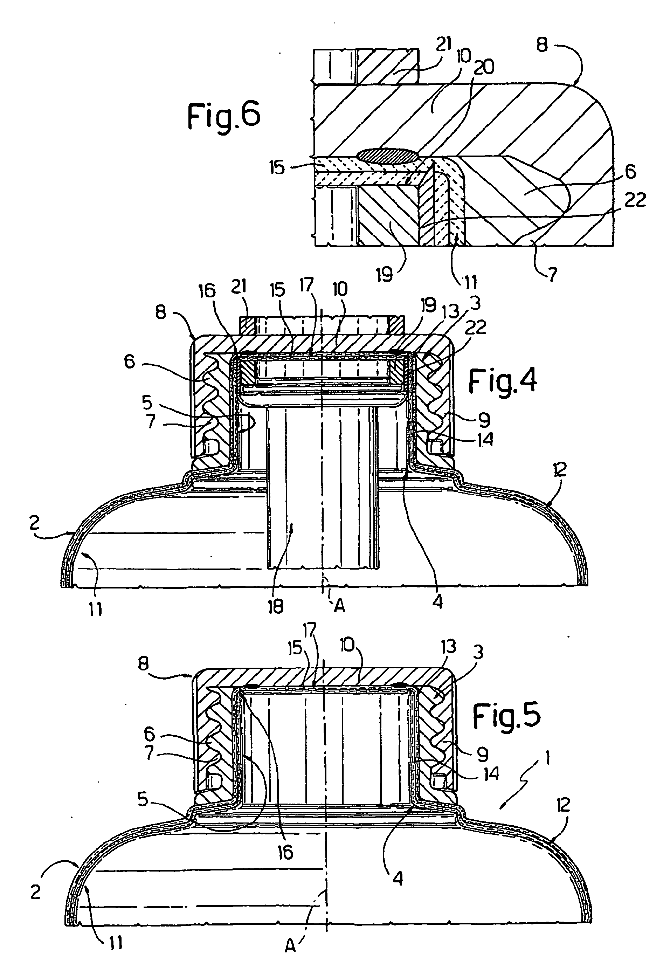

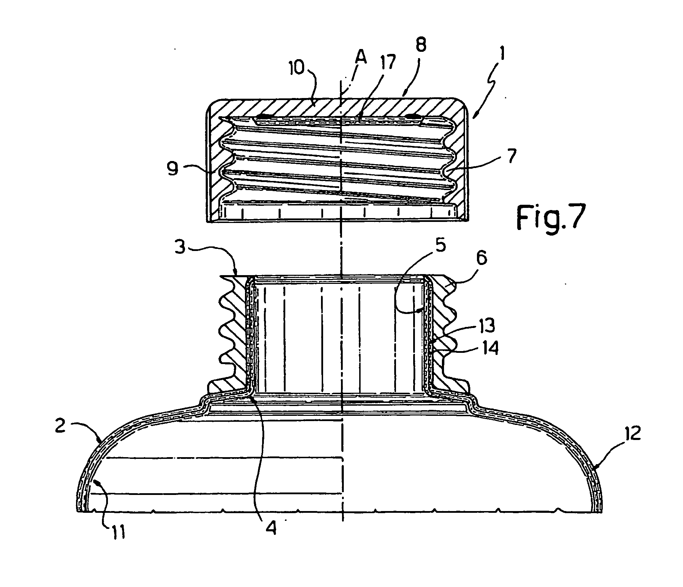

Number 1 in Figures 5 and 7 indicates as a whole a plastic top for a container (not shown) of liquid or pourable food products, such as a combined cardboard-plastic container - to which the following description refers purely by way of example - or a plastic bottle.

Top 1 has a longitudinal axis A, and comprises an annular base portion 2, which, in the example shown, is concave inwards of the container; and a substantially cylindrical tubular neck portion 3, which projects from an inner radial edge 4 of base portion 2, and defines, with base portion 2, a pour opening 5 by which to pour the food product out of the container.

More specifically, neck portion 3 has, along its outer lateral surface, a thread 6 for engaging a complementary thread 7 of a cylindrical cap 8.

Cap 8 is substantially defined by a cylindrical lateral wall 9 having thread 7 inside; and by a disk-shaped top wall 10 for closing, in use, the top of pour opening 5.

Top 1 is produced according to the method described below.

Firstly, a forming operation, preferably a thermoforming or hot forming operation, is performed on a multilayer plastic sheet material comprising a layer of gas-barrier material, e.g. EVOH.

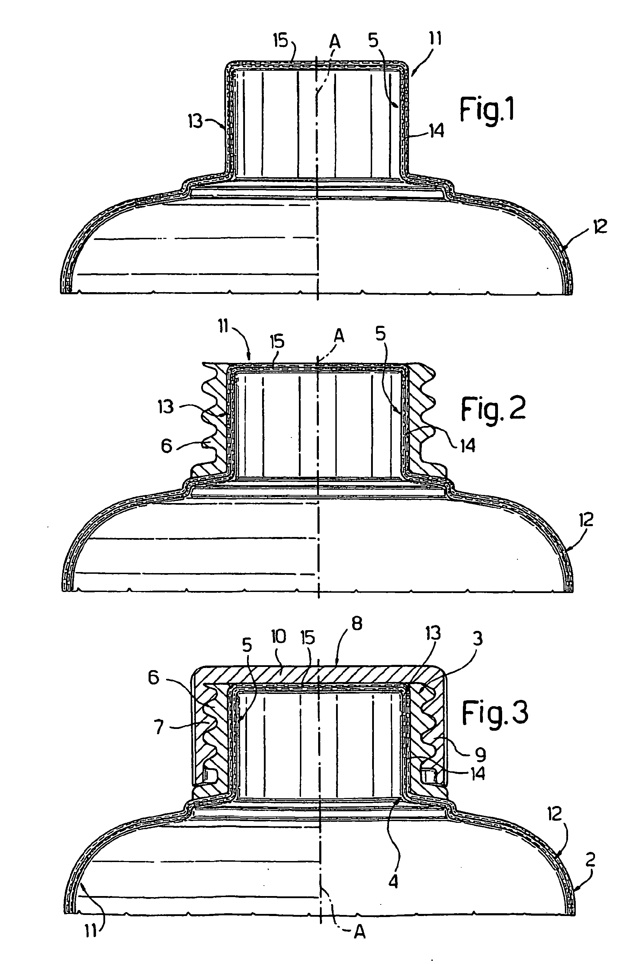

The forming operation produces a hollow, substantially hat-shaped body 11 (Figure 1), which is open on the side facing the container to which it is eventually applied, and is closed on the opposite side.

More specifically, body 11 comprises an annular bottom portion 12 integrally defining base portion 2; and an inverted cylindrical cup-shaped top portion 13 projecting axially from the inner radial edge of bottom portion 12. Top portion 13 has a lateral wall 14 defining the inner side of neck portion 3, and therefore laterally bounding pour opening 5; and a disk-shaped top wall 15 closing pour opening 5.

Next (Figure 2), plastic material is injection molded onto the outer side of lateral wall 14 of top portion 13 of body 11 to form thread 6.

The injected material may be defined, for example, by polyethylene or polypropylene or polyolefin.

At this point (Figure 3), cap 8 is applied to the body so formed, so that threads 6 and 7 engage mutually, and top wall 10 of cap 8 is positioned adjacent to, or rather superimposed on, disk-shaped top wall 15 of body 11.

Top wall 10 of cap 8 and top wall 15 of body 11 are joined, e.g. by ultrasonic welding, along at least their outer periphery; and an annular cut 16 is made on top wall 15 of body 11, on the side facing pour opening 5 (Figures 4 and 6).

Top wall 15 of body 11 thus defines a layer 17 of gas-barrier material of cap 8, i.e. a "liner", as this layer is commonly referred to in the packaging of pourable food products.

As shown in Figures 4 and 6, the ultrasonic welding operation and the formation of cut 16 are performed simultaneously by a device 18, which substantially comprises a substantially cylindrical tubular pressure member 19 having an annular work surface 20 cooperating with top wall 15 of body 11, and an ultrasound generating unit (not shown); a backup member 21 cooperating with top wall 10 of cap 8 on the opposite side to pressure member 19; and guide means (not shown) for moving pressure member 19 to and from backup member 21 to obtain the desired compression force during ultrasound generation.

The outer periphery of pressure member 19 is fitted with a cutting member 22 which acts on top wall 15 to make cut 16.

When unsealing the container (Figure 7), unscrewing cap 8 detaches top wall 15 from body 11, by virtue of cut 16; and, as opposed to being discarded, wall 15 remains attached to top wall 10 of cap 8, by virtue of the weld.

The advantages of the method and of top 1 according to the teachings of the present invention will be clear from the foregoing description.

In particular, the liner of cap 8 need no longer be produced separately, and is simply obtained from top wall 15 of body 11 produced by means of a forming operation. On the one hand, this provides for eliminating any waste in material, and on the other, makes the method of producing container tops 1 extremely fast and straightforward.

Clearly, changes may be made to the method and top 1 as described and illustrated herein without, however, departing from the scope as defined in the accompanying Claims.

## Claims

1. A method of producing plastic tops (1) for sealed containers of pourable food products, said method comprising the steps of:
- forming a contoured body (11) from a plastic sheet material having a layer of gas-barrier material, said contoured body (11) comprising an annular base portion (2, 12), and a neck portion (3, 13), which projects from said base portion (2, 12), defines, with the base portion (2, 12), a pour opening (5) of said container, and is closed, on the opposite side to said base portion (2, 12), by a disk-shaped member (15); and
- applying a cap (8) to said neck portion (3, 13);
and being **characterized by** comprising the further steps of:
- making a cut (16) along the periphery of said disk-shaped member (15), on the side facing said pour opening (5); and
- joining said disk-shaped member (15), by adhesion, to a portion (10) of said cap (8) superimposed on the disk-shaped member, so that said disk-shaped member (15) defines a layer of gas-barrier material of the cap (8).

2. A method as claimed in claim 1, **characterized in that** said forming step is a hot-forming step.

3. A method as claimed in claim 1 or 2, **characterized by** comprising the further step of injection molding a thread (6) on said neck portion (3, 13) of said contoured body (11), on the opposite side to that bounding said pour opening (5); said cap (8) having an internal thread (7) which engages said thread (6) of said neck portion (3, 13).

4. A method as claimed in any one of the foregoing claims, **characterized in that** said step of joining by adhesion is an ultrasonic welding step.

5. A method as claimed in any one of the foregoing claims, **characterized in that** said step of joining by adhesion is performed close to the peripheral edge of said disk-shaped member (15).

6. A plastic top (1) for sealed containers of pourable food products, said top (1) comprising:
- an annular base portion (2, 12);
- a neck portion (3, 13) projecting from said base portion (2, 12), defining, with the base portion (2, 12), a pour opening (5) of said container, and closed, on the opposite side to said base portion (2, 12), by a disk-shaped member (15); and
- a cap (8) applied to said neck portion (2, 12);
and being **characterized in that** said disk-shaped member (15) has a cut (16) along its outer periphery, on the side facing said pour opening (5); and **in that** said disk-shaped member (15) is joined to a portion (10) of said cap (8) superimposed on the disk-shaped member, so that said disk-shaped member (15) defines a layer of gas-barrier material of the cap (8).

7. A top as claimed in claim 6, **characterized in that** said neck portion (3, 13) and the cap (8) have an external and internal thread (6, 7) respectively, which engage in the closed position of the cap (8).

8. A top as claimed in claim 6 or 7, **characterized in that** said cap (8) comprises a cylindrical lateral wall, (9), said thread (7) being located on the inside of said cylindrical lateral wall (9); and a top wall (10) which, in use, closes the top of said pour opening (5) and is joined to said disk-shaped member (15) .

## Patentansprüche

1. Verfahren zur Herstellung von Kunststoffoberteilen (1) für versiegelte Behälter für fließfähige Nahrungsmittel, wobei das Verfahren die Schritte umfasst:
- Bilden eines konturierten Körpers (11) aus einem blattförmigen Kunststoffmaterial, das eine Schicht aus Gassperrmaterial hat, wobei der konturierte Körper (11) einen ringförmigen Basisabschnitt (2, 12) und einen Stutzen (3, 13) umfasst, und wobei der Stutzen (3, 13), der von dem Basisabschnitt (2, 12) vorsteht, mit dem Basisabschnitt (2, 12) eine Ausgießöffnung (5) des Behälters definiert und auf der dem Basisabschnitt (2, 12) gegenüberliegenden Seite durch ein scheibenförmiges Teil (15) geschlossen ist, und
- Aufbringen einer Verschlusskappe bzw. Kappe (8) auf dem Stutzen (3, 13),
und **gekennzeichnet durch** das Umfassen der folgenden Schritte:
- Ausführen eines Schnitts (16) entlang dem Umfang des scheibenförmigen Teils (15) auf der der Ausgießöffnung (5) zugewandten Seite, und
- Haftverbinden des scheibenförmigen Teils (15) mit einem Abschnitt (10) der Kappe (8), der auf dem scheibenförmigen Teil aufgebracht ist, so dass das scheibenförmige Teil (15) eine Schicht aus Gassperrmaterial der Kappe (8) definiert.

2. Verfahren nach Anspruch 1, **dadurch gekennzeichnet, dass** der Formschritt ein Warmformschritt ist.

3. Verfahren nach Anspruch 1 oder 2, **gekennzeichnet durch** das Umfassen des zusätzlichen Schritts des Spritzgießens eines Gewindes (6) auf den Stutzen (3, 13) des konturierten Körpers (11), auf der gegenüberliegenden Seite zu der, die an die Ausgießöffnung (5) angrenzt, wobei die Kappe (8) ein Innengewinde (7) hat, das in das Gewinde (6) des Stutzens (3, 13) eingreift.

4. Verfahren nach einem der vorhergehenden Ansprüche, **dadurch gekennzeichnet, dass** der Schritt des Haftverbindens ein Ultraschallschweißschritt ist.

5. Verfahren nach einem der vorhergehenden Ansprüche, **dadurch gekennzeichnet, dass** der Schritt des Haftverbindens nahe der Umfangskante des scheibenförmigen Teils (15) ausgeführt wird.

6. Kunststoffoberteil (1) für versiegelte Behälter für fließfähige Nahrungsmittel, wobei das Oberteil (1) umfasst:
- einen ringförmigen Basisabschnitt (2, 12),
- einen Stutzen (3, 13), der von dem Basisabschnitt (2, 12) vorsteht, mit dem Basisabschnitt (2, 12) eine Ausgießöffnung (5) des Behälters definiert und auf der dem Basisabschnitt (2, 12) gegenüberliegenden Seite durch ein scheibenförmiges Teil (15) geschlossen ist, und
- eine Kappe (8), die auf dem Stutzen (2, 12) aufgebracht ist,
und **dadurch gekennzeichnet ist, dass** das scheibenförmige Teil (15) einen Schnitt (16) entlang seinem Außenumfang auf der der Öffnung (5) zugewandten Seite aufweist, und dass das scheibenförmige Teil (15) verbunden ist mit einem Abschnitt (10) der Kappe (8), der auf dem scheibenförmigen Teil aufgebracht ist, so dass das scheibenförmige Teil (15) eine Schicht aus Gassperrmaterial der Kappe (8) definiert.

7. Oberteil nach Anspruch 6, **dadurch gekennzeichnet, dass** der Stutzen (3, 13) und die Kappe (8) jeweils ein äußeres und inneres Gewinde (6, 7) haben, die in der geschlossenen Stellung der Kappe (8) eingreifen.

8. Oberteil nach Anspruch 6 oder 7, **dadurch gekennzeichnet, dass** die Kappe (8) eine zylindrische Seitenwand (9) umfasst, wobei sich das Gewinde (7) auf der Innenseite der zylindrischen Seitenwand (9) befindet, und eine obere Wand (10), die bei Benutzung das obere Ende der Ausgießöffnung (5) schließt und mit dem scheibenförmigen Teil (15) verbunden ist.

## Revendications

1. Procédé de production de couvercles en plastique (1) pour des conteneurs scellés destinés à recevoir des denrées alimentaires fluides, ledit procédé comprenant les étapes consistant à :
- former un corps profilé (11) à partir d'une feuille de matière plastique possédant une couche de matériau faisant obstacle aux gaz, ledit corps profilé (11) comprenant une partie de base annulaire (2, 12), et une partie col (3, 13) faisant saillie à partir de ladite partie de base (2, 12), définissant, avec la partie de base (2, 12), une ouverture de versement (5) dudit conteneur, et étant fermée, sur la face opposée à ladite partie de base (2, 12), par un élément en forme de disque (15) ; et
- appliquer un capuchon (8) sur ladite partie col (3, 13) ;
et étant **caractérisé en ce qu'**il comprend les étapes supplémentaires consistant à :
- réaliser une coupe (16) le long de la périphérie dudit élément en forme de disque (15), sur la face orientée vers ladite ouverture de versement (5) ; et
- assembler ledit élément en forme de disque (15), par adhérence, sur une partie (10) dudit capuchon (8) superposé sur l'élément en forme de disque, de manière à ce que l'élément en forme de disque (15) définisse une couche de matériau faisant obstacle aux gaz du capuchon (8).

2. Procédé selon la revendication 1, **caractérisé en ce que** ladite étape de formation est une étape de façonnage à chaud.

3. Procédé selon la revendication 1 ou 2, **caractérisé en ce qu'**il comprend l'étape supplémentaire consistant à mouler par injection un filet (6) sur ladite partie col (3, 13) dudit corps profilé (11), sur la face opposée à celle limitant ladite ouverture de versement (5) ; ledit capuchon (8) ayant un filet intérieur (7) s'engageant dans ledit filet (6) de ladite partie col (3, 13).

4. Procédé selon l'une quelconque des revendications précédentes, **caractérisé en ce que** ladite étape d'assemblage par adhérence est une étape de soudage par ultrasons.

5. Procédé selon l'une quelconques des revendications précédentes, **caractérisé en ce que** ladite étape d'assemblage par adhérence est réalisée à proximité du bord périphérique dudit élément en forme de disque (15).

6. Couvercle en plastique (1) pour des conteneurs scellés destinés à recevoir des denrées alimentaires fluides, ledit couvercle (1) comprenant :
- une partie de base annulaire (2, 12) ;
- une partie col (3, 13) faisant saillie à partir de ladite partie de base (2, 12), définissant, avec la partie de base (2, 12), une ouverture de versement (5) dudit conteneur, et étant fermée, sur la face opposée à ladite partie de base (2, 12), par un élément en forme de disque (15) ; et
- un capuchon (8) appliqué sur ladite partie col (2, 12) ;
et étant **caractérisé en ce que** ledit élément en forme de disque (15) présente une coupe (16) le long de sa périphérie extérieure, sur la face orientée vers ladite ouverture de versement (5) ; et **en ce que** ledit élément en forme de disque (15) est assemblé sur une partie (10) dudit capuchon (8) superposé sur l'élément en forme de disque, de manière à ce que ledit élément en forme de disque (15) définisse une couche de matériau faisant obstacle aux gaz du capuchon (8).

7. Couvercle selon la revendication 6, **caractérisé en ce que** ladite partie col (3, 13) et le capuchon (8) possèdent un filet extérieur et intérieur (6, 7) respectivement, s'engageant dans la partie fermée du capuchon (8).

8. Couvercle selon la revendication 6 ou 7, **caractérisé en ce que** ledit capuchon (8) comprend une paroi latérale cylindrique (9), ledit filet (7) se situant à l'intérieur de ladite paroi latérale cylindrique (9) ; et une paroi supérieure (10) qui, en usage, ferme le haut de ladite ouverture de versement (5) et qui est assemblée audit élément en forme de disque (15).
